# EUROPEAN PATENT SPECIFICATION

(11) **EP 2 249 050 B1**
(45) Date of publication and mention of the grant of the patent: **31.10.2012**
(21) Application number: 09305418.7
(22) Date of filing: 07.05.2009
(51) Int. Cl.: F16C 25/08, F16C 35/073

(54) **Rolling bearing assembly and vehicle steering shaft.**
Wälzlageranordnung und Fahrzeuglenkwelle
Ensemble de roulement à rouleaux et arbre de direction de véhicule

(43) Date of publication of application: 10.11.2010
(73) Proprietor: Aktiebolaget SKF, 415 50 Göteborg (SE)
(72) Inventor: Delos, Jacques, 45390 DESMONTS (FR)
(74) Representative: Casalonga, Axel

(56) References cited:
- EP-A1- 1 184 583
- EP-A1- 1 988 002
- FR-A1- 2 718 803
- US-B1- 6 375 360

## Description

The present invention relates to rolling bearing assemblies, in particular for supporting a steering shaft of an automotive vehicle.

The steering shaft of automotive vehicles generally comprises an outer tube and an inner tube or a shaft to which the steering wheel is attached. A set of two rolling bearing assemblies is normally used for supporting the outer tube on the inner tube of the steering shaft. Each said rolling bearing assembly generally comprises a rolling bearing, for example a ball bearing, with an outer ring and an inner ring between which the rolling elements or the balls are mounted and maintained by a cage element. The rolling bearing used are frequently comprising outer and inner rings made of thin metallic sheet material, which is stamped and rolled to provide the necessary rolling tracks for the rolling elements. The rolling bearing is mounted inside the outer tube of the steering shaft by way of an axial extension of its outer ring. The inner ring of the rolling bearing is mounted on the inner tube or shaft of the steering shaft through a connecting sleeve made of an electric conductive material such as metal allowing the control of electrical equipments mounted on or near the steering wheel, such as for example the horn. The connecting sleeve is provided with elastic portions which can be radially deformed, and thus permit to accept slight diameter differences between the outer and the inner tubes of the steering shaft.

The German patent application DE 103 00 725-A1 (INA) discloses such an arrangement including a metallic sleeve for mounting the rolling bearing on the steering shaft. A stop ring, also mounted on the shaft, is capable of urging the connecting sleeve axially, thus producing a radial preload on the rolling bearing through elastic protrusions provided on the periphery of the connecting sleeve.

The European patent application EP 1 988 002 (SKF) also discloses a rolling bearing assembly for a steering shaft, in which a metallic sleeve is provided for mounting a rolling bearing on the inner tube of the steering shaft. The connecting sleeve disclosed in this prior art document comprises a plurality of radially projecting tongues which constitute wedge-shaped portions acting on the inner ring of the rolling bearing so as to secure said inner ring in rotation with the inner tube of the steering shaft.

In both those prior art documents, the connecting sleeve has a rather complicated shape which is relatively difficult to manufacture. This leads to an increase of the manufacturing cost as well as the overall cost of the rolling bearing assembly.

The European patent application EP 1 184 583 (SKF) discloses a rolling bearing assembly, in particular for supporting a steering shaft or column of automotive vehicle with rolling elements mounted between an outer ring and an inner ring, and a metallic retaining element.

The disclosed assembly comprises a tolerance ring made of synthetic material through which a preloading force is transmitted to the rolling bearing.

An object of the present invention is therefore to provide a rolling bearing assembly, particularly adapted for supporting a steering shaft of an automotive vehicle, which is simple to manufacture, while guaranteeing an efficient preload force capable of efficiently securing the inner ring of the rolling bearing in rotation with the inner tube of a steering shaft.

In one embodiment, a rolling bearing assembly is proposed, in particular for supporting a steering shaft or column of an automotive vehicle. Said assembly comprises an outer ring, an inner ring, rolling elements mounted between the outer and the inner rings and a retaining means made of an electric conductive material arranged within the inner ring. The retaining means has the shape of a substantially radially flat ring, said ring being provided with axially elastic means and with substantially axially projecting tongues.

Said tongues have a first surface portion with a frustoconical shape adapted to contact said inner ring so as to exert on the rolling bearing a preloading force directed in the same direction as the oblique contact of the rolling elements and a second surface portion adapted to radially clamp the outer surface of a shaft or a tube.

The retaining means has a particularly simple structure and can easily be manufactured from a metal flank. It is thus particularly cheap. The projecting tongues are capable of contacting the inner ring of the rolling bearing as well as the cylindrical surface of a shaft on which the rolling bearing assembly is mounted, with a given pre loading force which can be kept on a long duration due to the structure of said projecting tongues, attached to the substantially radially flat ring by their base portion.

In a preferred embodiment, the axially elastic means comprises undulated portions formed on said substantially flat ring, said undulated portions being regularly distributed along the circumference of said substantially flat ring, between said projecting tongues. An axial force exerted on said undulations can generate a pre loading force on the rolling bearing assembly transmitted through said substantially flat ring.

Each projecting tongue may be extended circumferentially on each side by a resting pad having a first portion capable of contacting said inner ring and a second portion adapted to contact the outer cylindrical surface of a shaft or a tube on which the rolling bearing assembly is mounted. The contacting surfaces of the projecting tongues are thus increased while the base portion remains less wide for a better elasticity.

Each projecting tongue may also have a retaining hook at its distal end for axially retaining the inner ring of the rolling bearing.

In a preferred embodiment, the rolling bearing assembly comprises three projecting tongues and three axially elastic means, respectively alternatively distributed along the circumference of said substantially flat ring. In other embodiments however, different numbers of projecting tongues and axially elastic means can be used, for example two or four of each, always alternatively distributed along the circumference of said substantially flat ring.

As mentioned above, the retaining means may be easily obtained by stamping of a thin metal flank, the undulations and the projecting tongues being formed thereafter.

According to another aspect, it is proposed a steering shaft or column for an automotive vehicle comprising an inner tube or shaft and an outer tube, supported by at least one rolling bearing assembly as previously defined, which is mounted between said inner tube or shaft and said outer tube. A stop ring is mounted on said inner tube or shaft so as to axially urge the axially elastic means of the substantially radially flat ring of said at least one rolling bearing, the substantially axially projecting tongues being thus radially forced against the inner shaft.

In a preferred embodiment, two rolling bearing assemblies as previously defined, are mounted between said inner tube or shaft and said outer tube.

The present invention will be more readily understood by studying the detailed following description of one specific embodiment, which constitutes a non limiting example of the present invention, and is illustrated by the appended drawings on which:
- figure 1 shows two different sections of a rolling bearing assembly according to an example of the present invention, taken along the line I-I of figure 2;
- figure 2 is a side view of a rolling bearing assembly according to an example of the present invention;
- figure 3 is a perspective view of a radially flat ring used in the rolling bearing assembly illustrated on the preceding figures;
- figure 4 shows the flat ring of figure 3 after mounting within the inner ring of the rolling bearing assembly;
- figure 5 is another perspective view taken from the other side of the radially flat ring already illustrated on figure 3;
- figure 6 shows the flat ring of figure 5 after mounting inside the inner ring of the rolling bearing assembly, taken from the other side as compared to figure 4 ; and
- figure 7 is a longitudinal section, partially cut down, of a steering shaft portion supported by two rolling bearing assemblies as illustrated on the preceding figures.

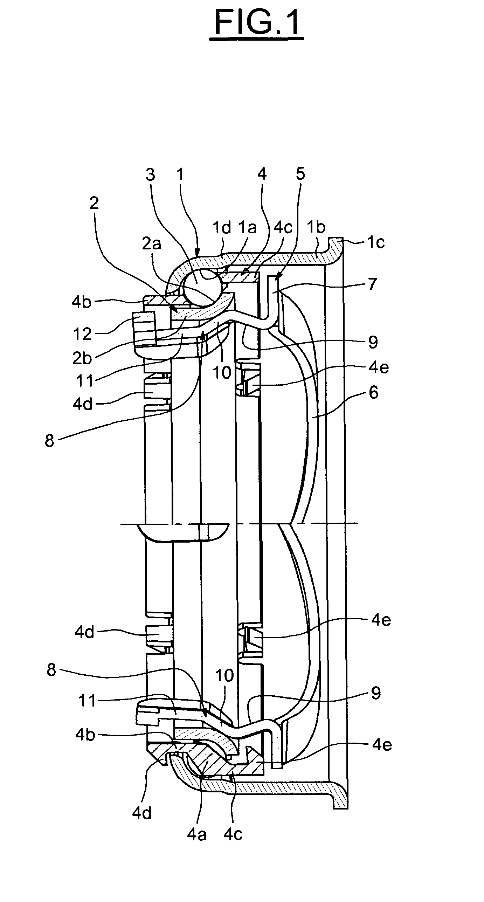

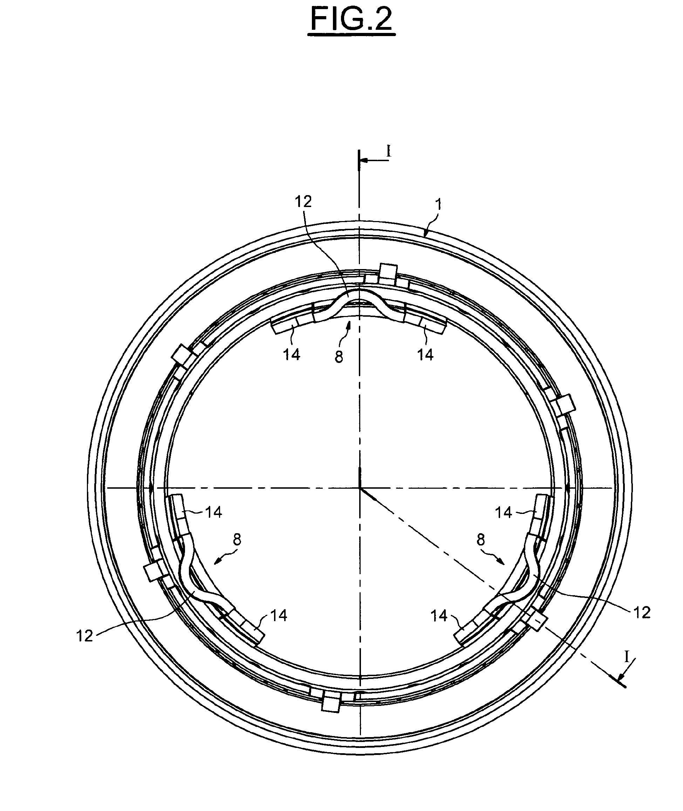

As illustrated on figures 1 to 6, an example of a rolling bearing assembly comprises an outer ring 1 and an inner ring 2, between which a row of balls 3 is mounted. The balls are maintained at appropriate spaces by a cage member 4. The outer ring 1 and the inner ring 2 are made of a thin metal sheet, which has been stamped or rolled so as to define toroidal tracks 1a, 2a for the balls 3 between the two rings 1, 2. The cage member 4 is made of synthetic material, for example by moulding. A substantially flat ring 5 extending generally in a radial plane, is made in of an electric conductive material such as metal, and is arranged within the inner ring 2.

The outer ring 1 comprises an axial portion 1b with a radially folded edge 1c at its end, opposite to the balls 3. The axial portion 1b merges with the toroidal portion 1a, with a slight deflection 1d, defining an outer diameter slightly smaller than the outer diameter of the axial portion 1b. The toroidal portion 1a, defining the track for the balls 3, may extend, for example, on an angular sector of about 45 to 90°.

The inner ring 2 has a cylindrical portion 2b, extending axially opposite from the cylindrical portion 1b of the outer ring 1. The rolling bearing defined by the outer ring 1, the inner ring 2 and the balls 3 constitutes a bearing with oblique contact so as to support axial as well as radial forces.

The cage member 4 has openings adapted for receiving the balls 3, separated by bridges 4a, obliquely disposed. The cage element 4 comprises an axial portion 4b of small diameter and an axial portion 4c of greater diameter, both portions 4b, 4c being integral with the oblique central portion defining said bridges 4a. A plurality of hooks 4d are provided at the end of the axial portion 4b of smaller diameter, so as to maintain the cage element 4 axially with regard to the outer ring 1. Similarly, a plurality of hooks 4e are provided at the end of the axial portion of greater diameter 4c, so as to maintain the cage element 4 axially with regard to the inner ring 2. The hooks 4d and 4e are directed respectively towards the outside and towards the inside of the rolling bearing assembly. Thanks to those hooks 4d, 4e, there is no risk of accidental separation of the inner ring 2, outer ring 1 and balls 3 before use of the rolling bearing assembly.

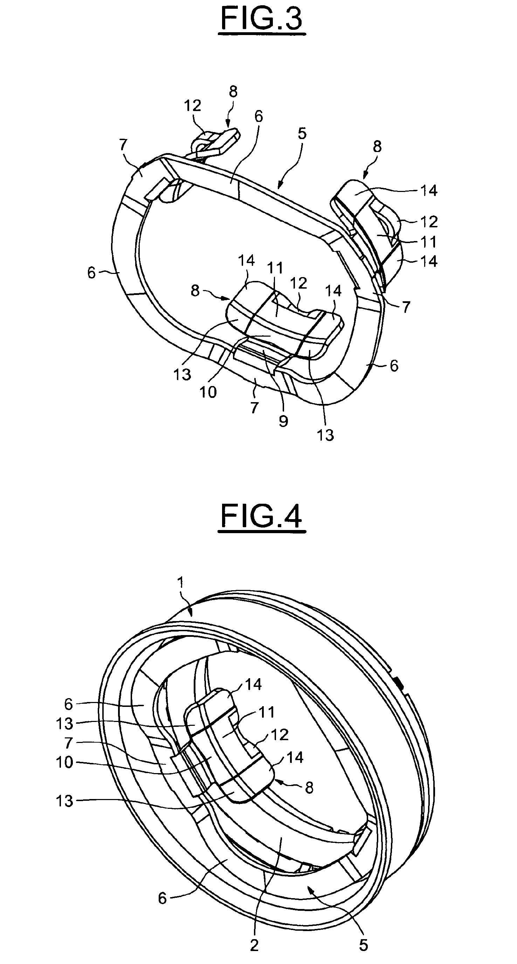

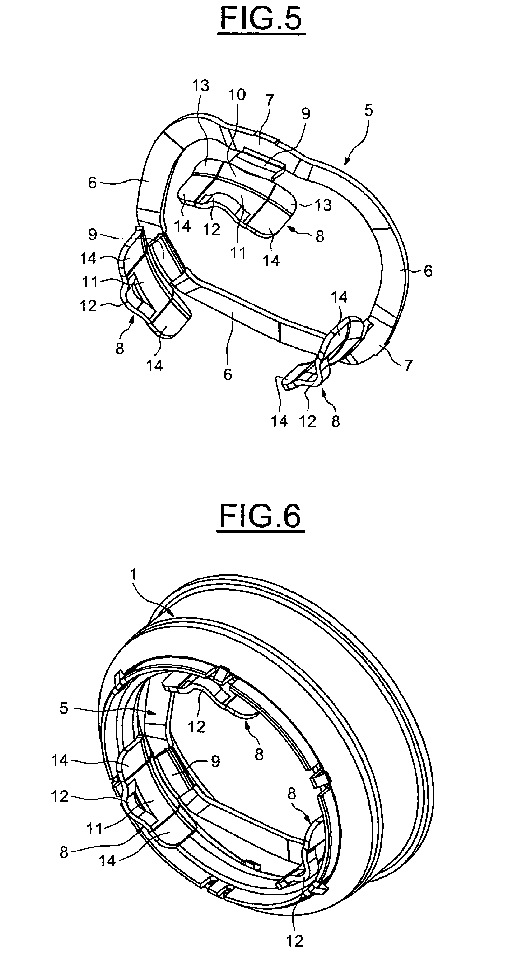

The substantially flat ring 5, which can also be seen on figures 3 and 5, has been axially deformed so as to provide undulated portion 6. In the example illustrated, the ring 5 has three undulated portions 6 regularly arranged along the circumference of said ring. As best seen on figure 1, the undulated portions 6 form a convex shape projecting from the radial plane of the flat ring 5 away from the balls 3 of the rolling bearing. The three undulated portions 6 are separated by flat radial portions 7 at which projecting tongues 8 are provided. In the illustrated example, there are three such projecting tongues 8. Each said tongue 8 projects in a generally axial direction, in the opposite direction from the undulated convex portion 6.

Each said tongue has a base portion 9, a first contacting portion 10 and a second contacting portion 11. As best seen on figure 1, the base portion 9 is slightly oblique with regard to the axis of the rolling bearing assembly and has an increasing diameter from the junction with the flat radial portion 7 to the junction with the first contacting portion 10. The first contacting portion 10 is also obliquely arranged, but in an opposite direction, having a frustoconical shape with a diameter decreasing from the junction with the base portion 9 to the junction with the second contacting portion 11. The outside surface of the first contacting portion 10 is adapted to contact the inner ring 2 in the area of its toroidal portion 2a, so as to exert a preloading force on the rolling bearing. In the present example, the preloading force is directed substantially obliquely in the same direction than the oblique contact of the balls 3 with the toroidal tracks 1a, 2a.

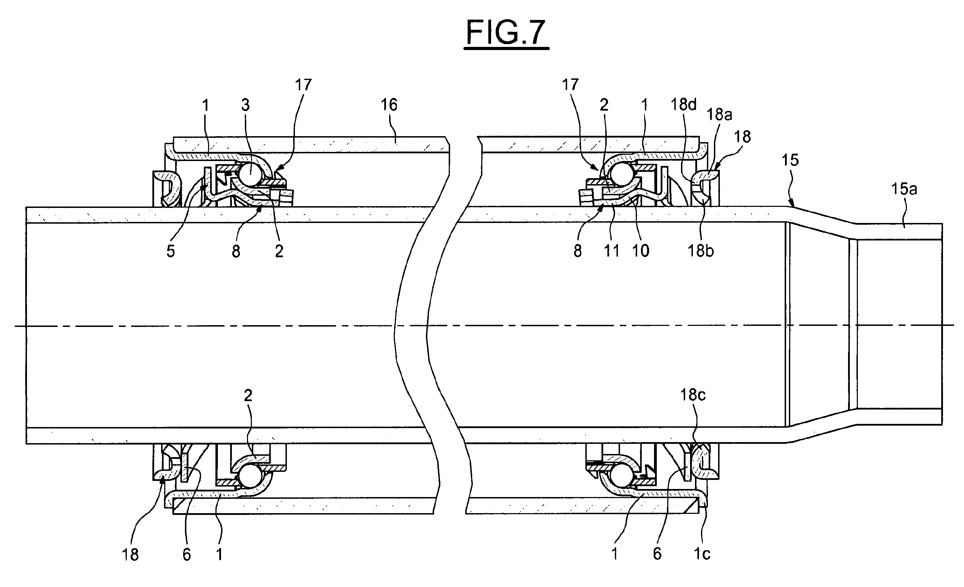

Each projecting tongue 8 has a retaining hook 12 at its distal end for axially retaining the inner ring 2, before mounting the rolling bearing assembly. This axially retaining function is obtained by a contact between the retaining hook 12 and the edge of the axial portion 2b of the inner ring 2. Each projecting tongue 8 is also extended circumferentially on each side by a resting pad having a first portion 13 and a second portion 14 which is best seen on figures 3 to 6. The outer surface of the first portion 13 of the resting pad of each projecting tongue 8 is also contacting the inner surface of the inner ring 2. The shape of the first portion 13, as well as the shape of the first contacting surface 10 of the projecting tongue 8 is thus adapted to the generally toroidal shape of the inner ring **2**. The inner surface of the resting pads 14 of each projecting tongue 8 as well as the inner surface of the second contacting portion 11 are adapted to contact the outer cylindrical surface of a tube or a shaft as will be explained below in connection with figure 7.

As previously mentioned, in the illustrated examples, there are three projecting tongues 8 and three undulated portions 6, respectively alternatively distributed along the circumference of the flat ring 5. Each projecting tongue 8 is attached to the flat ring 5 by its base portion 9 at one of the radial flat surface portions 7 of the flat ring 5.

This number of three has been found particularly advantageous since it permits to obtain a good centering of the rolling bearing assembly, and an easy manufacturing of the retaining means constituted by the substantially radially flat ring 5. Of course, in other embodiments, it could be possible to provide for a different number of undulations and tongues, for example two or four. Providing the two laterally extending resting pads with first portion 13 and second portion 14 on both sides of the projecting tongues 8 permits to increase the area of contact between the tongues 8 and the inner ring 2 of the rolling bearing, as well as a shaft or a tube on which the rolling bearing assembly is to be mounted, while keeping the necessary flexibility of the base portion 9, which has a smaller width than the total width of both resting pads and contacting portions 10, 11.

As illustrated on figure 7, a steering shaft or column for an automotive vehicle comprises an inner shaft 15 to which a non-illustrated steering wheel can be attached on an end 15a of smaller diameter. The steering shaft also has an outer tube 16, which is coaxially arranged around the inner tube 15. The outer tube 16 is supported on the inner tube 15 by two rolling bearing assemblies 17, having the structure already disclosed on figures 1 to 6, references to the same elements being reproduced on figure 7. As illustrated on figure 7, each rolling bearing assembly 17 is axially urged toward the inside of the outer tube 16 by a stop ring 18, which has a cylindrical portion 18a and a substantially conical portion 18b, with a plurality of tongues 18c, in contact with the outer cylindrical surface of the inner tube 15. The stop ring 18 has a substantially radial contacting surface 18d able to contact the undulated portions 6 of the rolling bearing assembly 17. An axial force is exerted by the stop ring 18 when said stop ring 18 is pushed towards the inside of the outer tube 16. It must be noted that during this pushing action, the tongues 18c are slightly elastically deformed, authorizing a shifting of said stop ring 18 along the cylindrical surface of the inner tube 15 towards the inside of the outer tube 16, but forbidding a movement in the opposite direction. The axial force exerted by the stop ring 18 on the elastic undulations 6, leads to a radial clamping of the projecting tongues 8 of the rolling bearing assembly 17 against the outer surface of the inner tube 15. This clamping effect is obtained by the tightening of the second contacting surface 11 of the projecting tongues 8 with the inner tube 15. This can be noted namely by comparing figure 1, which shows the rolling bearing assembly before mounting, and figure 7, which shows the same rolling bearing assembly 17 after being mounted on the inner tube 15. On figure 1, the projecting tongues 8 are slightly inclined toward the axis of the rolling bearing, while on figure 7 the projecting tongues 8 are substantially axially oriented in contact with the outer surface of the inner tube 15. This shows that the projecting tongues 8 have been elastically deformed when mounting the rolling bearing assembly 17 between the inner tube 15 and the outer tube 16 of the steering shaft.

In the mounted position illustrated on figure 7, a radial preload is exerted by the first contacting surface 10 and the first portion 13 of the resting pad of each projecting tongue 8 against the inner ring 2 of the rolling bearing assembly 17. At the same time, the rolling assembly 17 is secured by friction on the outer surface of the inner tube 15, by the second contacting surface 11, and the second portion 14 of the resting pads. The shape of the surface formed by the second contacting surface 11 and the two lateral second portions 14 of the resting pads corresponds to the cylindrical outer surface of the inner tube 15.

Also seen on figure 7, is the way the outer tube 16 is retained by the folded edge 1c of the outer ring 1. Said outer ring 1 supports by its axial cylindrical portion 1b, the inner diameter of the outer tube 16 of the steering shaft.

The specific structure of the retaining means used in the rolling bearing assembly of the present invention, with its substantially radial flat ring, elastic undulations, and projecting tongues permits to obtain a relatively cheap element, easy to manufacture, and particularly efficient for mounting the rolling bearing assembly between the inner tube or inner shaft and the outer tube of a steering shaft of an automotive vehicle.

## Claims

1. A rolling bearing assembly, in particular for supporting a steering shaft or column of an automotive vehicle, comprising an outer ring (1), an inner ring (2), rolling elements (3) mounted with oblique contact between the outer and the inner rings and a retaining means made of an electric conductive material arranged within the inner ring (2), said retaining means having the shape of a substantially radially flat ring (5), said ring being provided with axially elastic means (6) and with substantially axially projecting tongues (8)**characterized in that** said tongues have a first surface portion (10) with a frustoconical shape adapted to contact said inner ring (2) so as to exert on the rolling bearing a preloading force directed in the same direction as the oblique contact of the rolling elements and a second surface portion (11) adapted to radially clamp the outer surface of a shaft or a tube.

2. The rolling bearing assembly according to claim 1 wherein the rolling elements are balls and the shape of said first surface portion (10) of each projecting tongues is adapted to the generally toroïdal shape of the inner ring.

3. The rolling bearing assembly according to any preceding claim wherein the axially elastic means comprise undulated portions (6) of said ring (5), said undulated portions being regularly distributed along the circumference of said ring, between said projecting tongues (8).

4. The rolling bearing assembly according to any preceding claim wherein each projecting tongue (8) is extended circumferentially on each side by a resting pad having a first portion (13) capable of contacting said inner ring (2) and a second portion (14) adapted to contact a shaft or a tube.

5. The rolling bearing assembly according to any preceding claim wherein each projecting tongue (8) has a retaining hook (12) at its distal end for axially retaining the inner ring (2) of the rolling bearing.

6. The rolling bearing assembly according to any preceding claim comprising three projecting tongues (8) and three axially elastic means (6), respectively alternatively distributed along the circumference of said substantially flat ring (5).

7. The rolling bearing assembly according to any preceding claim wherein the retaining means has been obtained by stamping of a thin metal flank.

8. A steering shaft or column for an automotive vehicle comprising an inner shaft or tube (15) and an outer tube (16), with at least one rolling bearing assembly (17) according to one of the preceding claims, mounted between said inner shaft or tube (15) and said outer tube (16), a stop ring (18) mounted on said inner shaft (15) and axially urging the axially elastic means (6) of the substantially radially flat ring (5) of said at least one rolling bearing assembly (17), the substantially axially projecting tongues (8) being radially forced against the inner shaft (15).

9. The steering shaft of claim 8 wherein two rolling bearing assemblies (17) according to one of the preceding claims are mounted between said inner shaft or tube (15) and said outer tube (16).

## Patentansprüche

1. Wälzlageranordnung, insbesondere zur Abstützung einer Lenkwelle oder -säule eines Kraftfahrzeugs, umfassend einen Außenring (1), einen Innenring (2), Wälzkörper (3), die mit schiefwinkliger Berührung zwischen dem Außen- und dem Innenring angebracht sind, und ein Haltemittel, das aus einem elektrisch leitenden Material hergestellt und in dem Innenring (2) angeordnet ist, wobei das Haltemittel die Form eines im wesentlichen radial flachen Rings (5) aufweist, wobei der Ring mit axial elastischen Mitteln (6) und mit im wesentlichen axial vorragenden Zungen (8) versehen ist, **dadurch gekennzeichnet, dass** die Zungen einen ersten Flächenabschnitt (10) mit einer kegelstumpfförmigen Gestalt, der dazu ausgeführt ist, den Innenring (2) zu berühren, um auf das Wälzlager eine Vorbelastungskraft auszuüben, die in die gleiche Richtung wie die schiefwinklige Berührung der Wälzkörper ausgerichtet ist, und einen zweiten Flächenabschnitt (11), der dazu ausgeführt ist, die Außenfläche einer Welle oder eines Rohrs radial einzuklemmen, haben.

2. Wälzlageranordnung nach Anspruch 1, wobei die Wälzkörper Kugeln sind und die Form des ersten Flächenabschnitts (10) jeder vorragenden Zunge an die allgemein toroide Form des Innenrings angepasst ist.

3. Wälzlageranordnung nach einem vorhergehenden Anspruch, wobei die axial elastischen Mittel gewellte Abschnitte (6) des Rings (5) umfassen, wobei die gewellten Abschnitte gleichmäßig um den Umfang des Rings zwischen vorragenden Zungen (8) verteilt sind.

4. Wälzlageranordnung nach einem vorhergehenden Anspruch, wobei jede vorragende Zunge (8) um den Umfang auf jeder Seite durch ein Auflagesegment verlängert ist, das einen ersten Abschnitt (13), der den Innenring (2) berühren kann, und einen zweiten Abschnitt (14), der eine Welle oder ein Rohr berühren kann, aufweist.

5. Wälzlageranordnung nach einem vorhergehenden Anspruch, wobei jede vorragende Zunge (8) einen Haltehaken (12) an ihrem distalen Ende zum axialen Festhalten des Innenrings (2) des Wälzlagers aufweist.

6. Wälzlageranordnung nach einem vorhergehenden Anspruch, die drei vorragende Zungen (8) und drei axial elastische Mittel (6) umfasst, die jeweils abwechselnd um den Umfang des im Wesentlichen flachen Rings (5) verteilt sind.

7. Wälzlageranordnung nach einem vorhergehenden Anspruch, wobei das Haltemittel durch Stanzen einer dünnen Metallflanke erhalten worden ist.

8. Lenkwelle oder -säule für ein Kraftfahrzeug, umfassend eine innere Welle oder ein inneres Rohr (15) und ein äußeres Rohr (16), mit mindestens einer Wälzlageranordnung (17) nach einem der vorhergehenden Ansprüche, die zwischen der inneren Welle oder dem inneren Rohr (15) und dem äußeren Rohr (16) angebracht ist, und einem Anschlagring (18), der an der inneren Welle (15) angebracht ist und die axial elastischen Mittel (6) des im Wesentlichen radial flachen Rings (5) der mindestens einen Wälzlageranordnung (17) axial drückt, wobei die im Wesentlichen axial vorragenden Zungen (8) radial gegen die innere Welle (15) gedrückt werden.

9. Lenkwelle nach Anspruch 8, wobei zwei Wälzlageranordnungen (17) nach einem der vorhergehenden Ansprüche zwischen der inneren Welle oder dem inneren Rohr (15) und dem äußeren Rohr (16) angebracht sind.

## Revendications

1. Palier à roulement, en particulier pour supporter un arbre ou une colonne de direction d'un véhicule automobile, comprenant une bague extérieure (1), une bague intérieure (2), des éléments roulants (3) montés avec contact oblique entre les bagues extérieure et intérieure et un moyen de retenue fait d'un matériau conducteur de l'électricité placé dans la bague intérieure (2), ledit moyen de retenue ayant la forme d'un anneau substantiellement radialement plat (5), ledit anneau étant pourvu d'un moyen axialement élastique (6) et de languettes faisant saillie substantiellement axialement (8), **caractérisé en ce que** lesdites languettes ont une première partie de surface (10) de forme tronconique adaptée pour être en contact avec ladite bague intérieure (2) de façon à exercer sur le roulement une force de précontrainte dirigée dans la même direction que le contact oblique des éléments roulants et une deuxième partie de surface (11) adaptée pour serrer radialement la surface extérieure d'un arbre ou d'un tube.

2. Palier à roulement selon la revendication 1, dans lequel les éléments roulants sont des billes et la forme de ladite première partie de surface (10) de chaque languette saillante est adaptée à la forme globalement toroïdale de la bague intérieure.

3. Palier à roulement selon l'une quelconque des revendications précédentes, dans lequel le moyen axialement élastique comprend des parties ondulées (6) dudit anneau (5), lesdites parties ondulées étant réparties régulièrement le long de la circonférence dudit anneau, entre lesdites languettes saillantes (8).

4. Palier à roulement selon l'une quelconque des revendications précédentes, dans lequel chaque languette saillante (8) est prolongée circonférentiellement de chaque côté par un patin d'appui comportant une première partie (13) apte à être en contact avec ladite bague intérieure (2) et une deuxième partie (14) adaptée pour être en contact avec un arbre ou un tube.

5. Palier à roulement selon l'une quelconque des revendications précédentes, dans lequel chaque languette saillante (8) est munie d'un crochet de retenue (12) à son extrémité distale pour retenir axialement la bague intérieure (2) du roulement.

6. Palier à roulement selon l'une quelconque des revendications précédentes, comprenant trois languettes saillantes (8) et trois moyens axialement élastiques (6), respectivement répartis alternativement le long de la circonférence dudit anneau substantiellement plat (5).

7. Palier à roulement selon l'une quelconque des revendications précédentes, dans lequel le moyen de retenue a été obtenu par estampage d'un flan en métal mince.

8. Arbre ou colonne de direction pour véhicule automobile comprenant un arbre ou tube intérieur (15) et un tube extérieur (16), avec au moins un palier à roulement (17) selon l'une des revendications précédentes, monté entre ledit arbre ou tube intérieur (15) et ledit tube extérieur (16), une bague d'arrêt (18) montée sur ledit arbre intérieur (15) et poussant axialement le moyen axialement élastique (6) de l'anneau substantiellement radialement plat (5) dudit palier à roulement (17), les languettes faisant saillie substantiellement axialement (8) étant pressées radialement contre l'arbre intérieur (15).

9. Arbre de direction selon la revendication 8, dans lequel deux paliers à roulement (17) selon l'une des revendications précédentes sont montés entre ledit arbre ou tube intérieur (15) et ledit tube extérieur (16).
